(19) Europäisches Patentamt
European Patent Office
Office européen des brevets

(11) Publication number: **0 068 148**
**B1**

# (12) EUROPEAN PATENT SPECIFICATION

(45) Date of publication of patent specification: **22.01.86**

(51) Int. Cl.[4]: **C 08 L 23/08**

(21) Application number: **82104596.0**

(22) Date of filing: **26.05.82**

## (54) Tack-free polymer pellets.

(30) Priority: **26.05.81 US 267082**
**16.02.82 US 348012**

(43) Date of publication of application:
**05.01.83 Bulletin 83/01**

(45) Publication of the grant of the patent:
**22.01.86 Bulletin 86/04**

(84) Designated Contracting States:
**BE DE FR GB IT NL**

(56) References cited:
**AU-A- 449 441**
**DE-A-2 708 814**
**US-A-3 165 492**

(73) Proprietor: **E.I. DU PONT DE NEMOURS AND COMPANY**
**1007 Market Street**
**Wilmington Delaware 19898 (US)**

(72) Inventor: **Smith, Malcolm Seaborn**
**21 Chaucer Drive**
**Orange Texas 77630 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

This invention relates to tack-free polymer pellets, for example, ethylene/vinyl acetate copolymer pellets having good handling and block resistance characteristics.

For the purpose of this invention, the term "vinyl acetate copolymer" includes both the dipolymers and the terpolymers of ethylene with vinyl acetate and with carbon monoxide.

Ethylene/vinyl acetate (EVA) copolymers find wide commercial use in flexible, heat sealable, functional, and decorative hot-melt and solvent-applied coatings; as wax additives to impart toughness, flexibility, and adhesion; as blending resins to impart flexibility to brittle materials; and as a component of hot-melt and solvent-applied adhesives. Most commercial EVA dipolymers contain about 2—55% by weight of vinyl acetate. Terpolymers of ethylene with vinyl acetate and with carbon monoxide may contain about 18—40 weight percent of vinyl acetate and 2—12 weight percent of carbon monoxide. Dipolymers of ethylene with vinyl acetate are available, e.g., from E. I. du Pont de Nemours and Company, Wilmington, Delaware, under the trademark "Elvax"; the terpolymers with carbon monoxide can be made according to the teachings of US—A—2,495,286 and US—A—3,780,140. As the vinyl acetate content of the copolymer increases, the copolymer tends to become increasingly sticky. Copolymer pellets, the usual commercial form, at the same time increasingly tend to block, that is, to stick together and form large agglomerates, especially at somewhat elevated temperatures and under pressure of their own weight. This stickiness and the resulting blocking also increase with the copolymer's melt index, that is, with decreasing molecular weight. For example, for bulk EVA copolymer containing about 25—30% by weight of vinyl acetate, problems of this nature usually are encountered when the melt index exceeds 6 g/10 min. Yet, even those copolymers will have different flow properties and blocking tendencies, depending on their melt index values. For example, those copolymers having melt indices below about 50 g/10 min can be shipped in 26.65 kg bags or in 500 kg boxes without blocking. Those having melt indices above about 100 g/10 min cannot be shipped in large containers without risk of blocking but can be shipped in bags. All these copolymers are free flowing and can be handled without difficulty. Higher vinyl acetate content copolymers, for example, those containing above 35 weight percent of vinyl acetate, are very sticky, have poor flow properties, and block even in regular size bags. Most higher vinyl acetate content EVA copolymers cannot be shipped in hopper cars. Other polymers which present difficulties of similar nature, but especially in shipping and storage, are dipolymers of ethylene with methacrylic acid in which the carboxyl groups are either free or partly neutralized with metal ions as well as dipolymers of ethylene with methyl methacrylate. Copolymers of ethylene with methacrylic acid are available from E. I. du Pont de Nemours and Company under the name "Surlyn" (reg. trademark). These are partly neutralized, ionic form polymers (ionomers). The base resins (unneutralized copolymers) are made by the same company but are commercially available in limited quantities only. Copolymers of ethylene with methyl methacrylate can be made according to US—A—3,287,335 and US—A—3,949,016.

A particularly serious problem, which occurs in the pelletization and packaging equipment handling tacky polymers, especially certain grades of ethylene/vinyl acetate copolymers, is the tendency of the pellets to stick both to themselves and to the equipment, thus slowing down the process flow rate below its optimum value. If the pellets cannot be handled at normal process speeds or cannot be handled at all, the efficiency of the process suffers greatly.

All polymers contemplated by this invention have a tendency to block in storage in pellet form but not all present significant handling difficulties or have poor flow properties. Various techniques have been proposed to improve the flow properties of EVA copolymer pellets and to reduce their tendency to block, especially, coating the pellets with various materials such as clay, talc, or powdered polyethylene. See, for example, US—A—3,528,841 to Donaldson et al. These methods are effective in varying degrees but have a shortcoming in that they do not always completely eliminate agglomeration of the pellets, which may occur before the coating is applied; and, further, the coating may not remain indefinitely attached to a pellet but may be lost in part in normal handling.

Slip (anti-tack) agents are offered commercially to improve the slip of polymer films and polymer processability. These include, for example, various fatty acid amides, which for the most part have been found to be ineffective or only marginally effective in reducing the tendency of EVA pellets to block but are quite effective in certain polymers of other types.

Summary of the invention

It has now been discovered that the blocking tendency of pellets of polymers selected from the group consisting of

(a) dipolymers of ethylene with vinyl acetate containing about 18—55 weight percent of vinyl acetate,

(b) terpolymers of ethylene with vinyl acetate and carbon monoxide containing about 20—40 weight percent of vinyl acetate and 3—12 weight percent of carbon monoxide,

(c) copolymers of ethylene with methacrylic acid containing about 6—30 weight percent of methacrylic acid, wherein the carboxyl groups are neutralized with zinc ions to the extent of 0 to about 50%, and

(d) copolymers of ethylene with methyl methacrylate containing about 18—40 weight percent of methyl methacrylate

can be significantly reduced or the free-flowing properties of the pellets can be significantly improved by incorporating into the polymer material prior to pelletization about 500—10,000 parts per million (ppm), especially 1000—5000 ppm, based on the polymer weight of an additive selected from the group consisting of N,N'-ethylen*bis*oleamide and N,N'-ethylene*bis*erucamide.

Detailed description of the invention

N,N'-Ethylene*bis*oleamide,

$$C_8H_{17}CH{=}CH(CH_2)_7\text{—}\overset{\overset{\displaystyle O}{\|}}{C}NHC_2H_4NH\overset{\overset{\displaystyle O}{\|}}{C}\text{—}(CH_2)_7CH{=}CHC_8H_{17},$$

the preferred additive, is available commercially from Carstab Corp. in Reading, Ohio, under the name "Advawax" 240 (reg. trademark); from HumKo Sheffield Co., Memphis, Tenn., under the name "Kemamide" W-20 (reg. trademark); and from Glyco Chemical Co., Greenwich, Conn. under the name "Glycolube" (reg. trademark) VL. The commercial product has a melting range of 113—118°C and is difficultly soluble in most commercial solvents. It is recommended by its manufacturers as processing lubricant and antiblocking agent for various polymers and copolymers, especially as a slip agent for films. Its recommended level is 0.5—2%. The other additives can be made by known methods from readily available materials. Thus, ethylene*bis*erucamide is made by heating 1,2-ethylenediamine with erucic acid.

It is believed that the additives of this invention have a particular ability to migrate within the polymer pellets to the surface or "bloom". The resulting layer of additive on the pellet surface is responsible for the improvement of pellet properties, but all four additives do not migrate at the same rates. It has been found that N,N'-ethylene*bis*oleamide migrates to the surface of EVA copolymer pellets nearly instantaneously, while for N,N'-ethylene*bis*erucamide the rate of migration is much slower. N,N'-ethylene*bis*oleamide thus is truly outstanding in its effectiveness both to reduce blocking and to improve handling and free flow properties. However, when time is not a critical consideration, all four additives are very effective.

The effectiveness of an antiblocking agent can be estimated in various manners, although the best test naturally is actual storage over an extended period. One may judge the feel of pellets made from a polymer, which should be slippery, rather than tacky. Stick temperature is a useful measurement for EVA copolymers having about 25—30% of vinyl acetate as well as for most other polymers. Although a low stick temperature does not always mean that pellets will have a tendency to block, a high stick temperature normally suggests that the pellets will not have such tendency. For high vinyl acetate content copolymers a laboratory blocking test has been devised. Improvement of the handling and packaging throughput in actual production also is an excellent indication of good slip properties, especially for these higher vinyl acetate content copolymers.

The amides of this invention can be added to the copolymers by any convenient technique, for example, in the melt, as a dry powder below its melting temperature, or as a concentrate in the same or any compatible polymer. The additive is thoroughly blended with the polymer, and then the polymer is extruded into pellets. It is preferred to use the additive at a level of 1000—5000 ppm, especially 2000—4000 ppm because at lower levels the improvement in slip properties may not be sufficiently attractive, while at higher levels other properties, for example, the adhesive properties of the copolymer may be adversely affected.

EVA copolymers sometimes are formulated with a small amount, about 2—13%, of a paraffin wax. Addition of an amide of this invention to such wax-containing EVA copolymer also improves its resistance to blocking. The amount of the additive is, as before, based on the weight of the EVA copolymer.

This invention is now illustrated by the following examples of certain representative embodiments thereof, where all the parts, proportions, and percentages are by weight. All the blends were prepared in an extruder and underwater melt cut to pelletize the product.

The rate of migration of two of the additives of this invention to the pellet surface was determined as follows: a sample, 100—200 g of freshly underwater cut pellets was centrifuged in a wire basket for 30 seconds to spin-dry the pellets. The centrifuge was allowed to come to a stop; the wire basket was removed and turned upside down. From the instant the pellets were cut to that point, the total time was under 2.5 minutes. An ethylene/vinyl acetate dipolymer containing about 40% of vinyl acetate without additive did not fall out of the basket, but a sample containing 3000 ppm of N,N'-ethylene*bis*oleamide was free-flowing. For the same concentration of N,N'-ethylene*bis*erucamide, the free-flowing time was 45 minutes. Similarly, an ethylene/vinyl acetate/carbon monoxide terpolymer containing 28% of vinyl acetate and 9% of carbon monoxide (melt index of 35 g/10 min) was not free-flowing without an additive. A sample containing 4000 ppm of N,N'-ethylene*bis*oleamide was free-flowing as soon as the wire basket was removed and turned upside down. When N,N'-ethylene*bis*erucamide was used instead, the additive migration time was 30 minutes.

The stick temperature test measures the tendency of polymer pellets to flow after holdup for a fixed time at a fixed temperature and pressure. The stick temperature is defined as the maximum temperature at which all the polymer empties from the test apparatus in less than one minute.

Polymer pellets are placed in a vertical tube having inside diameter of 3.9 cm and length of 23.2 cm

lined with a poly(ethylene terephthalate) film. A 4086 g weight is placed on top of the pellets, so that the downward pressure is 33.5 kPa. Hot air is passed upward through the tube at 11 $cm^3$/min for 15 min; then air at ambient temperature is passed for 5 min. The weight is then removed, and the tube is inverted. Time during which all the pellets flow out of the tube is noted. The test is repeated at gradually increasing temperatures until a point is reached when only a portion of the copolymer pellets or none of the pellets flow out of the tube. The stick temperature is the last temperature at which all the pellets flowed out.

The stick temperature of a given EVA copolymer will to some extent depend on the size and shape of the pellets. Smaller, nonspherical pellets block more readily than larger, spherical pellets. Therefore, it is important to run a control experiment for each stick temperature determination. All the pellets used in the examples below weighed 1.8—3.2 g per 100 pellets and were "pillow"-shaped.

Example 1

A 5% concentrate of N,N'-ethylen*bis*oleamide in an EVA dipolymer containing 28% of vinyl acetate and having a melt index of 150 g/10 min was prepared by melting the EVA dipolymer in a kettle at 220°C under nitrogen and adding the required amount of the *bis*oleamide. The concentrate was heated with occasional stirring until homogeneous, poured into a slab, and ground.

Blends of EVA dipolymer having a melt index of 150 g/10 min and 28% of vinyl acetate with the above concentrate, which contained 1000, 2000, and 3000 ppm of the *bis*oleamide were prepared and pelletized. They had a definite slippery feel.

The following stick temperatures were obtained:

| | |
|---|---|
| EVA copolymer control | 30.1°C |
| 1000 ppm blend | 36.7°C |
| 2000 ppm blend | 36.5°C |
| 3000 ppm blend | 40.7°C |

Example 2

EVA dipolymers having melt indices, respectively, of 150, 43, and 25 g/10 min and a vinyl acetate content of 28%, each was blended with the *bis*oleamide/EVA concentrate of Example 1 to give *bis*oleamide concentrations of 3000, 4000, and 5000 ppm and pelletized as before. All these blends had a slippery feel, which the control EVA copolymers did not have.

The following stick temperatures were obtained for the 3000 ppm blends and for the control copolymers:

| EVA dipolymer melt index | Stick temperature | |
|---|---|---|
| | Control | Blend |
| 150 | 32°C | 34°C |
| 43 | 30°C | 36°C |
| 25 | 30°C | 38°C |

Example 3

Blends of EVA dipolymer having a melt index of 150 g/10 min and containing 28% of vinyl acetate with the N,N'-ethylene*bis*oleamide/EVA concentrate of Example 1 to give, respectively, 3000 and 5000 ppm of the *bis*oleamide were prepared. All had the slippery feel, but their stick temperatures were close to the stick temperature of the control copolymer. Six samples containing three commercial N,N'-ethylene-*bis*stearamides at the same levels also were prepared. They did not have a slippery feel, and their stick temperatures also were close to the controls. It is possible that a weighing error was made in the case of the *bis*oleamide, so that the actual amount of this additive was less than intended.

Example 4

A 25% concentrate of N,N'-ethylene*bis*oleamide in EVA dipolymer having a melt index of about 57 g/10 min and a vinyl acetate content of about 40% was prepared.

EVA dipolymer having a melt index of about 57 g/10 min and a vinyl acetate content of about 40% was blended with the above 25% concentrate to give a homogeneous blend containing 5000 ppm of the *bis*oleamide. Samples, 908.g each, of this blend, of re-extruded EVA dipolymer, and of commercial, clay-coated EVA dipolymer having the same melt indices and vinyl acetate concentrations were air dried for 16 hr at 40°C. The *bis*oleamide-containing sample flowed freely from a small bag; the other two samples were severely blocked.

Example 5

Samples, 9.08 kg each, of EVA dipolymer having a melt index of about 57 g/10 min and containing about 40% of vinyl acetate were prepared. They contained, respectively, 1000, 3000, and 5000 ppm of N,N'-ethylene*bis*oleamide. Each sample was placed in a bag under four bags of EVA copolymer (106.6 kg total) and checked from time to determine if it was free flowing. After 15 months, all samples still were free flowing. This performance is quite remarkable because the untreated copolymer is very soft and sticky and blocks in a matter of hours under these conditions.

Example 6

EVA dipolymer (28% of vinyl acetate and melt index of 150 g/10 min) samples containing 3000 and 5000 ppm samples of commercial anti-tack additives were prepared. The samples containing two commercial N,N'-ethylene*bis*oleamides, "Advawax" (reg. trademark) 240 and "Glycolube" (reg. trademark) VL, had a slippery feel. Their stick temperatures were 34—35°C, compared with untreated EVA copolymer control's stick temperature of 30.1—33.5°C. Samples containing three commercial makes of N,N'-ethylene*bis*stearamide, "Advawax" (reg. trademark) 275, 280, and 290 (Carstab Corp.), "Kemamide" (reg. trademark) W-40 (HumKo Sheffield Co., Memphis, Tenn.), and "Acrowax" C (Glyco Chemical Co., Greenwich, Conn.); oleamide, "Kemamide" (reg. trademark) U; and two materials of unknown composition, "Paricin" 285 (NL Industries, New York, N.Y.), and "Rosswax" (Frank B. Ross Co., Jersey City, N.Y.) were not slippery to the touch (did not bloom), and their stick temperatures were 29—31°C.

Example 7

EVA dipolymer having a melt index of 43 g/10 min and containing 33% of vinyl acetate and EVA dipolymer having a melt index of 400 g/10 min and containing 28% of vinyl acetate, each also containing, respectively, 1000, 3000, and 500 ppm of N,N'-ethylene*bis*oleamide had a slippery feel, and their stick temperatures were moderately increased, as shown:

| EVA Copolymer vinyl acetate, % | *bis*oleamide ppm | Stick temp. °C |
|---|---|---|
| 33 | — | 26 |
| | 1000 | 29 |
| | 3000 | 31 |
| | 5000 | 31 |
| 28 | — | 25 |
| | 1000 | 30 |
| | 3000 | 30 |
| | 5000 | 31 |

Example 8

An industrial batch, 18160 kg, of EVA copolymer having a melt index of 57 g/10 min and containing 40% of vinyl acetate blended with N,N'-ethylene*bis*oleamide to a level of 4000 ppm of the *bis*oleamide was prepared and pelletized. It was found that N,N'-ethylene*bis*oleamide migrated to the surface of the pellets and formed a protective coating in a matter of seconds. These coated pellets could be transferred, purged, and blended without blocking, and their transfer rate was about 20% higher than that of clay-coated pellets. They continued to flow freely after 6 weeks at 32°C. Clay-coated copolymer pellets block in less than 30 days under these conditions.

Example 9

A plant run copolymer containing 90% of ethylene and 10% of methacrylic acid (melt index of 500 g/10 min) was blended with the indicated amounts of test amides. The compositions and stick temperatures of the samples are given in the table below. It can be seen that N,N'-ethylene*bis*oleamide provides a meaningful increase of stick temperature.

| Additive (ppm) | Stick temp., °C |
|---|---|
| Control | 46 |
| 5000 erucamide | 43 |
| 5000 stearamide | 48 |
| 5000 N,N'-ethylene*bis*stearamide | 48 |
| 1000 N,N'-ethylene*bis*oleamide | 49 |
| 5000 N,N'-ethylene*bis*oleamide | 55 |

Example 10

The same test was performed with an ethylene/methacrylic acid copolymer containing 15% of methacrylic acid. Again, N,N'-ethylene*bis*oleamide provided a significant increase of stick temperature, as can be seen from the following table:

| Additive (ppm) | Stick temp., °C |
|---|---|
| Control | 34 |
| 5000 erucamide | 36 |
| 5000 stearamide | 42 |
| 5000 N,N'-ethylene*bis*stearamide | 42 |
| 1000 N,N'-ethylene*bis*oleamide | 34 |
| 5000 N,N'-ethylene*bis*oleamide | 47 |

Example 11

The same test was performed with an ethylene/methacrylic acid copolymer containing 15% of methacrylic acid and 20% neutralized with $Zn^{++}$ ions. The copolymer had a melt index of 12 g/10 min. Here again, the most significant improvement of stick temperature was obtained with N,N'-ethylene-*bis*oleamide. The experimental results are provided in the table below.

| Additive (ppm) | Stick temp., °C |
|---|---|
| Control | 30 |
| 5000 erucamide | 31 |
| 5000 stearamide | 40 |
| 5000 N,N'-ethylene*bis*stearamide | 41 |
| 1000 N,N'-ethylene*bis*oleamide | 40 |
| 5000 N,N'-ethylene*bis*oleamide | 48 |

Example 12

A similar test was performed with an ethylene/methyl methacrylate copolymer containing 20% of methyl methacrylate. Its melt index was 3.2 g/10 min. The results are tabulated below.

| Additive (ppm) | Stick temp., °C |
|---|---|
| Control | 53 |
| 5000 erucamide | 55 |
| 5000 stearamide | 52 |
| 5000 N,N'-ethylene*bis*oleamide | 60 |

Example 13

A similar test was performed with a terpolymer of ethylene with vinyl acetate (28%) and carbon monoxide (9%), which had a melt index of 35 g/10 min. The results are given in the following table:

| Additive (ppm) | Stick temp., °C |
|---|---|
| Control | 30 |
| 5000 erucamide | 30 |
| 5000 stearamide | 37 |
| 5000 N,N'-ethylene*bis*stearamide | 30 |
| 1000 N,N'-ethylene*bis*oleamide | 33 |
| 3000 N,N'-ethylene*bis*oleamide | 33 |
| 5000 N,N'-ethylene*bis*oleamide | 33 |

It can be seen that in this test N,N'-ethylene*bis*oleamide did not raise the stick temperature as much as stearamide but was somewhat more effective than either erucamide or N,N'-ethylene*bis*stearamide. It will be remembered, however, that N,N'-ethylene*bis*oleamide migrated very fast in this polymer in the migration test described earlier in this disclosure.

Example 14

Highly tacky polymers cannot be evaluated satisfactorily in the stick temperature test. Therefore, a blocking test was developed for evaluation of the effectiveness of anti-tack agent candidates.

A hollow metal cylinder, 7.5 cm in inside diameter and 10 cm in length, lined with poly(ethylene terephthalate) film, is placed on a thin metal plate covered with poly(ethylene terephthalate film). The cylinder is filled with EVA copolymer pellets, and a 2050 g weight is placed on top of the pellets, resulting in a pressure of 4.3 kPa. The filled cylinder is kept at 30±2°C for a period of 8 hours. The cylinder is then carefully slipped off the column of pellets. If the copolymer maintains the shape of the cylinder, it is said to be blocked. If the copolymer pellets fall into a pile, it is said to be free flowing.

EVA copolymer having a melt index of 57 g/10 min and a vinyl acetate content of about 40% was formulated with 1000 and 5000 ppm of each of the following:

"Kemamide" S (stearamide) and

"Kemamide" E (erucamide)

All samples were sticky (similar to wet snow). Samples containing 1000 ppm of additive blocked in the bags and were not subjected to the blocking test. Both 5000 ppm samples blocked in the test.

Example 15

The following EVA dipolymer (40% of vinyl acetate; melt index of 57 g/10 min) samples containing the indicated level of the indicated amide were prepared via 10 or 25% amide concentrates, as described in Examples 1 and 4, and pelletized:

| Run No. | Amide Type | Amide Concentration, ppm |
|---|---|---|
| 1 | stearamide | 10000 |
| 2 | stearamide | 15000 |
| 3 | N-oleyl-N-palmitimide | 1000 |
| 4 | N-oleyl-N-palmitimide | 5000 |
| 5 | oleamide | 1000 |
| 6 | oleamide | 5000 |
| 7 | N,N'-ethylene*bis*stearamide | 1000 |
| 8 | N,N'-ethylene*bis*stearamide | 5000 |
| 9 | N,N'-ethylene*bis*oleamide | 1000 |
| 10 | N,N'-ethylene*bis*oleamide | 5000 |
| 11 | oleamide | 1000 |
| 12 | oleamide | 5000 |
| 13 | oleamide | 3000 |
| 14 | N,N'-ethylene*bis*oleamide | 3000 |
| 15 | N,N'-ethylene*bis*oleamide* | 3000 |
| 16 | erucamide<br>stearamide | 1500<br>375 |
| 17 | N,N'-ethylene*bis*oleamide* | 1875 |
| 18 | N,N'-ethylene*bis*oleamide* | 500 |

* Prepared from a 25% concentrate in EVA copolymer having a melt index of 150 g/10 min and a vinyl acetate content of 28%.

During the preparation of the above samples, each was observed on the drying screen immediately after pellet formation for pellet flowability. The pellets made in the following runs were free-flowing: 1, 2, 9, 10, 14, 15, 17, and 18.

In the blocking test described above in Example 9, the following samples remained free-flowing: 9, 10, 14, 15 and 17.

The remaining samples blocked. A commercial sample of clay-coated EVA copolymers also blocked in this test.

Example 16

The following EVA copolymer (28% of vinyl acetate, melt index of 150 g/10 min) samples were prepared as described in Example 10:

| Run No. | Amide Type | Concentration, ppm |
|---|---|---|
| 1 | oleamide | 3000 |
| 2 | N,N'-ethylene*bis*oleamide* | 3000 |
| 3 | N,N'-ethylene*bis*oleamide | 3000 |

* Prepared from a 10% concentrate in EVA copolymer having a melt index of 400 g/10 min.

The stick temperature of the base EVA copolymer used in runs 1—3 was 30°C. The stick temperatures of the samples of runs 1—3 were as follows:

| Run | Stick temperature, °C |
|---|---|
| 1 | 29 |
| 2 | 36 |
| 3 | 34 |

It can be seen that oleamide was a poor performer in this test, while N,N'-ethylene*bis*oleamide was a good performer.

**Claims**

1. A pellet of a polymer selected from the group consisting of:

(a) dipolymers of ethylene with vinyl acetate in which the amount of vinyl acetate is about 18—55 weight percent,

(b) terpolymers of ethylene with vinyl acetate and carbon monoxide in which the amount of vinyl acetate is about 20—40 weight percent and the amount of carbon monoxide is about 3—12 weight percent,

(c) copolymers of ethylene with methacrylic acid in which the amount of methacrylic acid is about 6—30 weight percent, the carboxyl groups of the copolymers being neutralized with zinc ions to an extent of 0 to about 50%, and

(d) copolymers of ethylene with methyl methacrylate in which the amount of methyl methacrylate is about 18—40 weight percent;

said pellet having incorporated into the copolymer an effective amount from about 500 to about 10000 parts by weight per million parts by weight of the polymer (ppm) of an additive selected from the group consisting of N,N'-ethylene*bis*oleamide, N,N'-ethylene*bis*erucamide to reduce the tackiness of the pellet by increasing the stick temprature.

2. A pellet of Claim 1 wherein the polymer is a dipolymer of ethylene with vinyl acetate or terpolymer of ethylene with vinyl acetate and carbon monoxide.

3. A pellet of Claim 2 wherein the additive is N,N'-ethylene*bis*oleamide.

4. A pellet of Claim 3 wherein the polymer is a dipolymer of ethylene with vinyl acetate.

5. A pellet of Claim 1 wherein the amount of the additive is 1000—5000 ppm.

6. A pellet of Claim 5 wherein the amount of the additive is 2000 to 4000 ppm.

7. A pellet of Claim 2 wherein the polymer also contains about 2—13% weight percent of paraffin wax.

8. A pellet of Claim 1 wherein the additive is N,N'-ethylene*bis*oleamide.

9. A method of reducing the tack and blocking tendency of polymers selected from the group consisting of:

(a) dipolymers of ethylene with vinyl acetate in which the amount of vinyl acetate is about 18—55 weight percent,

(b) terpolymers of ethylene with vinyl acetate and carbon monoxide in which the amount of vinyl acetate is about 20—40 weight percent and the amount of carbon monoxide is about 3—12 weight percent,

(c) copolymers of ethylene with methacrylic acid in which the amount of methacrylic acid is about 6—30 weight percent, the carboxyl groups of the copolymers being neutralized with zinc ions to an extent of 0 to about 50%, and;

(d) copolymers of ethylene with methyl methacrylate in which the amount of methyl methacrylate is about 18—40 weight percent;

said method comprising incorporating into the polymer prior to pelletization an effective amount of about 500 to about 10000 parts by weight per million parts by weight (ppm) of an additive selected from the

group consisting of N,N'-ethylene*bis*oleamide, N,N'-ethylene*bis*erucamide, to increase the stick temperature.

10. The method of Claim 9 wherein the amount of the additive is 2000—4000 ppm.

**Patentansprüche**

1. Ein Pellet aus einem Polymeren, ausgewählt aus der Gruppe bestehend aus:

(a) Dipolymeren von Ethylen mit Vinylacetat, worin die Menge an Vinylacetat etwa 18—55 Gew.-% ist,

(b) Terpolymeren von Ethylen mit Vinylacetat und Kohlenmonoxid, worin die Menge an Vinylacetat etwa 20—40 Gew.-% ist, und die Menge an Kohlenmonoxid etwa 3—12 Gew.-% ist,

(c) Copolymeren von Ethylen mit Methacrylsäure, worin die Menge an Methacrylsäure etwa 6—30 Gew.-% ist, worin die Carboxylgruppen der Copolymeren mit Zinkionen in einem Ausmass von 0 bis etwa 50% neutralisiert sind, und

(d) Copolymeren von Ethylen mit Methylmethacrylat, worin die Menge an Methylmethacrylat etwa 18—40 Gew.-% ist;

wobei die Pellets in das Copolymere eine wirksame Menge von etwa 500 bis etwa 10000 Gew.-Teilen pro Million Gewichtsteile des Polymeren (ppm) eines Zusatzes eingearbeitet haben, der ausgewählt ist aus der Gruppe bestehend aus N,N'-Ethylen-bis-oleamid, N,N'-Ethylen-bis-erucamid, um die Klebrigkeit des Pellets durch Erhöhen der Klebrigkeitstemperatur, zu verringern.

2. Ein Pellet nach Anspruch 1, worin das Polymere ein Dipolymeres von Ethylen mit Vinylacetat oder ein Terpolymeres von Ethylen mit Vinylacetat und Kohlenmonoxid ist.

3. Ein Pellet nach Anspruch 2, worin der Zusatz N,N'-Ethylen-bis-oleamid ist.

4. Ein Pellet nach Anspruch 3, worin das Polymere ein Dipolymeres von Ethylen mit Vinylacetat ist.

5. Ein Pellet nach Anspruch 1, worin die Menge des Zusatzes 1000—5000 ppm ist.

6. Ein Pellet nach Anspruch 5, worin die Menge des Zusatzes 2000 bis 4000 ppm ist.

7. Ein Pellet nach Anspruch 2, worin das Polymere auch etwa 2—13 Gew.-% Paraffinwachs enthält.

8. Ein Pellet nach Anspruch 1, worin der Zusatz N,N'-Ethylen-bis-oleamid ist.

9. Eine Methode zur Verringerung der Klebrigkeit und der Blockierungsneigung von Polymeren, ausgewählt aus der Gruppe bestehend aus:

(a) Dipolymeren von Ethylen mit Vinylacetat, worin die Menge an Vinylacetat etwa 18—55 Gew.-% ist,

(b) Terpolymeren von Ethylen mit Vinylacetat und Kohlenmonoxid, worin die Menge an Vinylacetat etwa 20—40 Gew.-% und die Menge an Kohlenmonoxid etwa 3—12 Gew.-% ist,

(c) Copolymeren von Ethylen mit Methacrylsäure, worin die Menge an Methacrylsäure etwa 6—30 Gew.-% ist, worin die Carboxylgruppen der Copolymeren mit Zinkionen in einem Ausmass von 0 bis etwa 50% neutralisiert sind, und

(d) Copolymeren von Ethylen mit Methylmethacrylat, worin die Menge an Methacrylat etwa 18—40 Gew.-% ist;

wobei diese Methode das Einarbeiten in das Polymere, vor dem Pelletisieren, von einer wirksamen Menge von etwa 500 bis etwa 10000 Gew.-Teilen pro Million Gewichtsteile (ppm) eines Zusatzes umfasst, ausgewählt aus der Gruppe bestehend aus N,N'-Ethylen-bis-oleamid, N,N'-Ethylen-bis-erucamid, um die Klebrigkeitstemperatur zu erhöhen.

10. Das Verfahren nach Anspruch 9, worin die Menge des Zusatzes 2000—4000 ppm ist.

**Revendications**

1. Un granule d'un polymère choisi dans le groupe comprenant:

(a) les dipolymères d'éthylène et d'acétate de vinyle dans lesquels la quantité d'acétate de vinyle est d'environ 18 à 55% en poids,

(b) les terpolymères d'éthylène, d'acétate de vinyle et de monoxyde de carbone dans lesquels la quantité d'acétate de vinyle est d'environ 20 à 40% en poids et la quantité de monoxyde de carbone est d'environ 3 à 12% en poids,

(c) les copolymères d'éthylène et d'acide acrylique dans lesquels la quantité d'acide méthacrylique est d'environ 6 à 30% en poids, les groupes carboxyle des copolymères étant neutralisés par des ions zinc à raison de 0 à environ 50%, et

(d) les copolymères d'éthylène et de méthacrylate de méthyle dans lesquels la quantité de méthacrylate de méthyle est d'environ 18 à 40% en poids;

granule dans lequel est incorporée au copolymère une quantité efficace, d'environ 500 à environ 10 000 parties en poids par million de parties en poids du polymère (ppm) d'un additif choisi dans le groupe comprenant le N,N'-éthylène-bis-oléamide et le N,N'-éthylène-bis-érucamide pour diminuer l'adhésivité du granule en élevant la température de collage.

2. Un granule selon la revendication 1, dans lequel le polymère est un dipolymère d'éthylène et d'acétate de vinyle ou un terpolymère d'éthylène, d'acétate de vinyle et de monoxyde de carbone.

3. Un granule selon la revendication 2, dans lequel l'additif est le N,N'-éthylène-bis-oléamide.

4. Un granule selon la revendication 3, dans lequel le polymère est un dipolymère d'éthylène et d'acétate de vinyle.

5. Un granule selon la revendication 1, dans lequel la quantité de l'additif est de 1000 à 5000 ppm.

6. Un granule selon la revendication 5, dans lequel la quantité de l'additif est de 2000 à 4000 ppm.

7. Un granule selon la revendication 2, dans lequel le polymère contient aussi environ 2 à 13% en poids de cire de paraffine.

8. Un granule selon la revendication 1, dans lequel l'additif est le N,N'-éthylène-bis-oléamide.

9. Un procédé de diminution de l'adhésivité et de la tendance au blocage de polymères choisis dans le groupe comprenant:

(a) les dipolymères d'éthylène et d'acétate de vinyle dans lesquels la quantité d'acétate de vinyle est d'environ 18 à 55% en poids,

(b) les terpolymères d'éthylène d'acétate de vinyle et de monoxyde de carbone dans lesquels la quantité d'acétate de vinyle est d'environ 20 à 40% en poids et la quantité de monoxyde de carbone est d'environ 3 à 12% en poids,

(c) les copolymères d'éthylène et d'acide acrylique dans lesquels la quantité d'acide méthacrylique est d'environ 6 à 30% en poids, les groupes carboxyle des copolymères étant neutralisés par des ions zinc à raison de 0 à environ 50%, et

(d) les copolymères d'éthylène et de méthacrylate de méthyle dans lesquels la quantité de méthacrylate de méthyle est d'environ 18 à 40% en poids;

ce procédé consistant à incorporer au polymère, ayant granulation, une quantité efficace d'environ 500 à environ 10 000 parties en poids par million de parties en poids (ppm), d'un additif choisi dans le groupe comprenant le N,N'-éthylène-bis-oléamide et le N,N'-éthylène-bis-érucamide, pour élever la température de collage.

10. Procédé selon la revendication 9, dans lequel la quantité de l'additif est de 2000 à 4000 ppm.